(19) Europäisches Patentamt
European Patent Office
Office européen des brevets

(11) Veröffentlichungsnummer: **0 276 359**
**A2**

(12) **EUROPÄISCHE PATENTANMELDUNG**

(21) Anmeldenummer: 87109185.6

(22) Anmeldetag: 26.06.87

(51) Int. Cl.⁴: **B27D 5/00** , B29C 63/00 ,
//B29L31:44

(30) Priorität: 26.01.87 DE 3702155

(43) Veröffentlichungstag der Anmeldung:
**03.08.88 Patentblatt 88/31**

(84) Benannte Vertragsstaaten:
**AT CH DE ES FR GB IT LI SE**

(71) Anmelder: **IMA-Norte Maschinenfabriken**
**Klessmann GmbH & Co.**
**Am Ölbach 19**
**D-4830 Gütersloh 1(DE)**

(72) Erfinder: **Riesmeier, Wilhelm**
**Franz-Liszt Strasse 5**
**D-4990 Lübbecke 1(DE)**
Erfinder: **Rose, Martin**
**Heuerhofstrasse 8**
**D-4992 Espelkamp(DE)**

(74) Vertreter: **Elbertzhagen, Otto et al**
**Patentanwälte Thielking & Elbertzhagen**
**Gadderbaumer Strasse 20**
**D-4800 Bielefeld 1(DE)**

(54) **Verfahren und Vorrichtung zum Anbringen von Kantenmaterial an plattenförmige Werkstücke, wie Möbelelemente.**

(57) Gegenstand der Anmeldung ist ein Verfahren und eine Vorrichtung zum Anbringen eines bandförmigen, von einem Vorrat abzuziehenden Kantenmaterials an die Ecken und die Schmalseiten plattenförmiger Werkstücke, wie Möbelelemente. Die Ecken und Schmalseiten der Werkstücke gehen gerundet oder gesoftet in die Werkstückoberseite über. Mittels einer Druckrolle wird das Kantenmaterial an die Werkstückschmalseiten und -ecken angedrückt, das entsprechend mit einer Klebschicht an der abliegenden Seite an die Druckrolle herangeführt wird. Es soll die Aufgabe gelöst werden, ein Verfahren und eine Vorrichtung vorzuschlagen, wonach das bandförmige Kantenmaterial verwerfungsfrei auf die Schmalseiten der Werkstücke bis um die gesofteten oder gerundeten Werkstückecken herum aufgetragen werden kann. Dazu wird an dem zur Druckrolle hinführenden Band des Kantenmaterials diejenige Strecke von der Druckrolle weg in Richtung zum Vorrat abgemessen, welche die Druckrolle von ihrem Ausgangspunkt am Werkstück bis zur nächstfolgenden Werkstückecke abfährt. Am Ende dieser Strecke wird an derjenigen Seite des Bandes, die auf den gerundeten oder gesofteten Teil der Werkstückecke aufgebracht wird, eine Ausklinkung vorgenommen. Man ordnet dazu in Abstand vor der Druckrolle auf dem Zuführweg des Bandes des Kantenmaterials eine Stanzvorrichtung an, welche die Ausklinkung an der passenden Stelle aus dem Bandmaterial herausstanzt.

Fig. 1

## Verfahren und Vorrichtung zum Anbringen von Kantenmaterial an plattenförmige Werkstücke, wie Möbelelemente

Die Erfindung bezieht sich auf ein Verfahren und auf eine Vorrichtung zum Anbringen eines bandförmigen, von einem Vorrat abzuziehenden Kantenmaterials an die Ecken und die Schmalseiten plattenförmiger Werkstücke, wie Möbelelemente, der in den Gattungsbegriffen der Patentansprüche 1 und 3 näher bezeichneten Art.

Das Auftragen des bandförmigen Kantenmaterials auf die gerundeten oder gesofteten Ecken der Werkstücke bereitet besondere Schwierigkeiten, weil sich an den gerundeten oder gesofteten Abschnitten der Werkstückecken eine Materialstauchung ergibt. Denn in diesen Bereichen verhält sich das bandförmige Kantenmaterial nicht anders als würde es in einer Ebene liegend um eine Kurve herum geführt. Um ein flaches Aufliegen parallel zur Bandebene zu gewährleisten, müsste sich das Bandmaterial an der Kurveninnen Seite zusammenziehen können.

Da eine entsprechende Schrumpfung bei dem bandförmigen Kantenmaterial nicht möglich ist, muß man entweder Faltungen oder Verwerfungen im gesofteten oder gerundeten Bereich der Werkstückecken in Kauf nehmen oder dafür Sorge tragen, daß der entsprechende Materialüberschuß vor dem Auftragen des bandförmigen Kantenmaterials auf die Schmalseiten der Werkstücke bis um deren Ecken herum beseitigt wird. Auf der letzteren Lösung basiert der der Erfindung zugrunde liegende Gedanke.

Der Erfindung liegt deshalb die Aufgabe zugrunde, ein Verfahren und eine Vorrichtung vorzuschlagen, wonach das bandförmige Kantenmaterial verwerfungsfrei auf die Schmalseiten der Werkstücke bis um die gesofteten oder gerundeten Werkstückecken herum aufgetragen werden kann.

Diese Aufgabe wird bei einem Verfahren der gattungsgemäßen Art durch die kennzeichnenden Merkmale des Patentanspruchs 1 gelöst. Bei einer gattungsgemäßen Vorrichtung lösen die kennzeichnenden Merkmale des Patentanspruchs 3 diese Aufgabe.

Der besondere Vorteil der Erfindung liegt darin, daß diejenige Stelle an der das der Druckrolle zugeführte Materialband, an der zur Vermeidung von Materialstauchungen eine Ausklinkung oder ein Ausschnitt vorzunehmen ist, maschinell erfaßt und ausgeklinkt wird.Der Materialausschnitt des Bandes kann ohne Schwierigkeiten an den Verlauf der gesofteten oder gerundeten Werkstückecken angepaßt werden, so daß sich das Kantenmaterial falten-und verwer fungsfrei anlegt und lediglich eine kaum wahrnehmbare Stoßfuge auftritt. Da das Bandmaterial lediglich von einer Seite her eingeschnitten wird, indem ein in den meisten Fällen V-förmiger Abschnitt ausgeklinkt wird, bleibt das Band über den nicht-durchtrennten Teil weiterhin transportfähig, wobei der nicht-durchtrennte Teil des Bandes auf denjenigen Abschnitt der Werkstückecke aufgetragen werden, der senkrecht oder zumindest weitgehend senkrecht zur Werkstückoberseite steht. In diesem Bereich tritt nämlich die erwähnte Materialstauchung nicht auf.

Vorteilhafte Ausgestaltungsmerkmale der Erfindung ergeben sich aus den Unteransprüchen.

Die Erfindung wird nachfolgend anhand der Zeichnung an einem Ausführungsbeispiel noch näher erläutert. Dabei zeigen:

Figur 1 eine perspektivische Ansicht des Eckbereichs eines plattenförmigen Möbelelementes mit zur Oberseite hin gerundeten oder gesofteten Schmalseiten und Ecken,

Figur 2 eine schematische Draufsicht auf eine Vorrichtung zum Anbringen bandförmigen Kantenmaterials an die gesofteten Schmalseiten und Ecken von Werkstücken entsprechend Fig. 1,

Figur 3 einen Schnitt durch die Stanzvorrichtung der Vorrichtung nach Fig. 2 und

Figur 4 die Stirnansicht der Stanzvorrichtung nach Fig. 3.

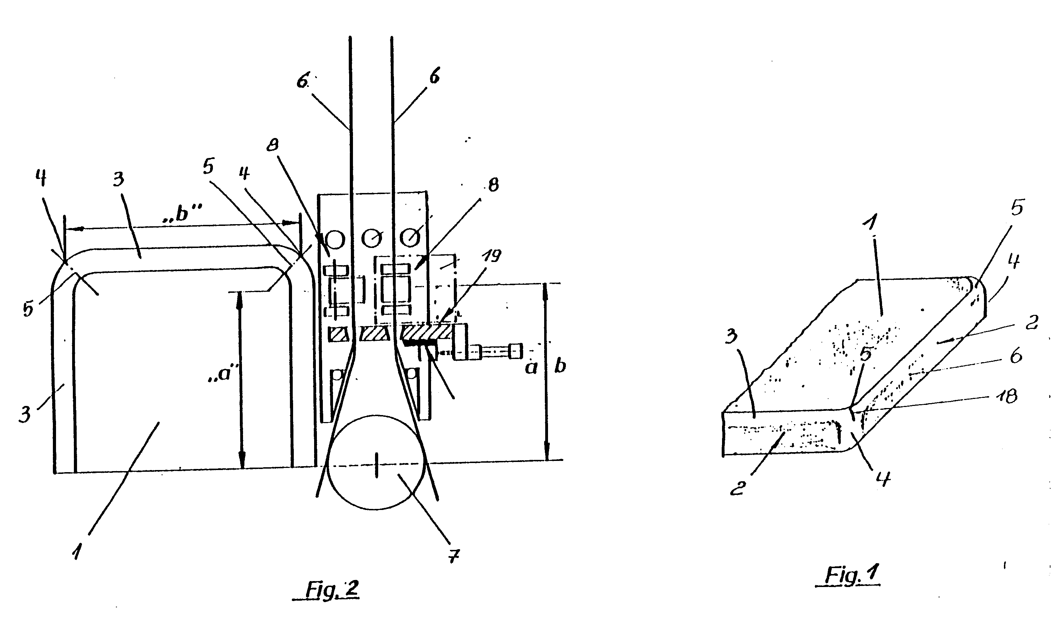

Im einzehen zeigt Figur 1 ein Werkstück 1 mit Schmalseiten 2, die keine ausgeprägte Oberkante zur Werkstückoberseite hin haben, sondern stattdessen einen gesofteten Oberabschnitt 3 besitzen, der tangential oder nahezu tangential einerseits in die Werkstückoberseite und andererseits in den übrigen Abschnitt der Werkstückschmalseiten 2 übergeht, der jeweils senkrecht oder weitgehend senkrecht zur Werkstückoberseite steht. Das Werkstück 1 besitzt ferner gerundete Ecken 4, die ebenfalls zur Werkstückoberseite gesoftete Abschnitte 5 besitzen. Auf die Schmalseiten 2 und die Ecken 4 einschl. der gesofteten Abschnitte 3 und 5 wird ein Band 6 eines Kantenmaterials aufgetragen, wobei es darauf ankommt, daß an den gesofteten Abschnitten 5 der Werkstückecken 4 keine Materialstauchungen auftreten.

Figur 2 veranschaulicht im Prinzip eine Maschine mit der ein solcher, verwerfungsfreier Kantenauftrag an dem jeweiligen Werkstück 1 vorgenommen werden kann. Das Kantenmaterial wird jeweils in Gestalt eines Bandes 6 von einem Vorrat zu einer Druckrolle 7 hingeführt, an die beim Ausführungsbeispiel zwei der Bänder 6 tangential angegeben sind. Man kann daher sowohl mit der linken als auch mit der rechten Seite der Druckrolle 7 an das Werkstück 1 heranfahren, je nach-dem welche Ausgangsposition die Druckrolle 7 vor dem Kantenauftrag ein-nimmt. An der von der Druckrolle 7 abliegenden Seite besitzen die Bänder 6 eine durch Heißluft aktivierbare Klebschicht.

Neben einer Kappvorrichtung 19 ist auf jedem Zuführweg der beiden Bänder 6 zu der Druckrolle 7 eine Stanzvorrichtung 8 angeordnet. Sie hat die Aufgabe, an denjenigen Stellen des betreffenden Bandes 6 die nach dem Auftrag auf die Schmalseiten des Werkstücks 1 an den Werkstückecken 4 zu liegen kcmmen, eine einen Materialstau im gesofteten Eckabschnitt 5 verhindernde Ausklinkung vorzunehmen. Nach dem Ausführungsbeispiel von Figur 2 werden drei Seiten des Werkstückes 1 von der Druckrolle 7 umfahren, wobei zwei Ecken 4 mit dem Kantenmaterial beschichtet werden. Entsprechend müssen von der Ausgangstelle am Werkstück 1 jeweils nach dem Abfahren der Strecken a und b die Ausklinkungen in dem aufzutragenden Band 6 vorhanden sein. Dazu mißt man die Abzuglängen a und b beispielsweise an der Druckrolle 7, deren Drehung dazu erfaßt werden kann, und nimmt mit der Stanzvorrichtung 8 an der betreffenden Stelle die Ausklinkung vor. Dabei versteht es sich, daß die Bandlänge, die sich zwischen der Stanzvorrichtung 8 und der Andrückstelle der Druckrolle 7 befindet mit berücksichtigt werden muß.

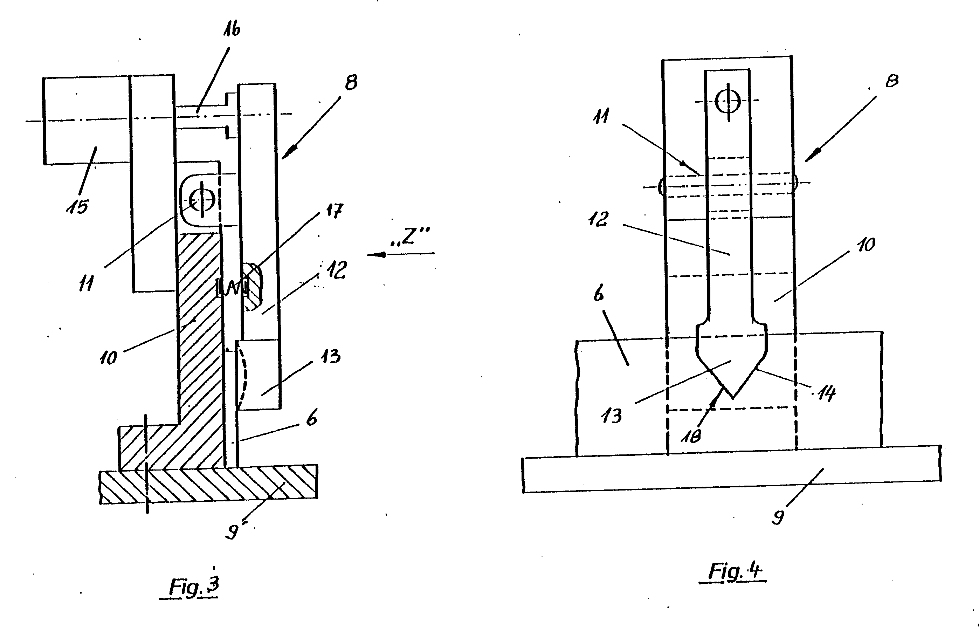

Die Figuren 3 und 4 zeigen Einzelheiten der Stanzvorrichtung 8. Sie umfaßt eine Grundplatte 9, auf der das Band 6 des Kantenmaterials hochkant an einer L-förmigen, aufrechtstehenden Matrize 1o vorbeigeführt wird. Am Oberende der Matrize 1o befindet sich ein Schwenklager 11, an dem ein Messer 12 in Gestalt einer Wippe gelagert ist. Der nach unten über die Vorderseite der Matrize 1o reichende Arm der Messerwippe 12 trägt einen Messerkopf 13, unter dem das Band 6 hindurchläuft und der etwa von der oben liegenden Bandkante her bis zur Bandmitte reicht. Der Messerkopf 13 besitzt eine senkrecht zur Längsrichtung des Bandes 6 symetrische Schneidkontur 14, die im wesentlichen V-förmig ist und sich beim Stanzen entsprechend als negative Ausklinkung 18 im Band 6 abbildet. Dazu muß der Messerkopf 13 gegen die Matrize 1o gedrückt werden, was durch einen Zylinder 15 mit einem Stößel 16 bewirkt wird. Der Stößel 16 beaufschlagt den oberen Arm der Messerwippe 12, und die Rückstellung der Messerwippe 12 wird durch eine Druckfeder 17 vorgenommen, die zwischen der Matrize 1o und dem unteren Wippenarm angeordnet ist.

Wie Figur 1 weiter deutlich macht, zieht sich die Ausklinkung 18 im Bereich des gesofteten Abschnittes 5 der Werkstückecke 4 zu einer Stoßfuge 18 im Kantenmaterial zusammen, die kaum sichtbar ist.

## Ansprüche

1. Verfahren zum Anbringen eines bandförmigen, von einem Vorrat abzuziehenden Kantenmaterials an die Ecken und die Schmalseiten plattenförmiger Werkstücke, wie Möbelelemente, wobei die Ecken und die Schmalseiten gerundet oder gesoftet in die Oberseite der Werkstücke übergehen, mittels einer Druckrolle, an die das Kantenmaterial mit einer Klebschicht an der abliegenden Seite herangeführt und durch dieses Material an die Werkstück-Schmalseiten und -ecken angedrückt wird, dadurch gekennzeichnet, daß an dem zur Druckrolle (7) hinführenden Band (6) des Kantenmaterials diejenige Strecke (a) von der Druckrolle (7) weg in Richtung zum Vorrat hin abgemessen wird, welche die Druckrolle (7) von ihrem Ausgangspunkt am Werkstück (l) bis zur nächstfolgenden Werkstückecke (4) abfährt, und am Ende dieser Strecke (a) an derjenigen Seite des Bandes (6), die auf den gerundeten oder gesofteten Teil (5) der Werkstückecke (4) aufgebracht wird, eine Ausklinkung (18) vorgenommen wird.

2. Verfahren nach Anspruch l, dadurch gekennzeichnet, daß beim Überfahren zweier oder mehrerer gerundeter oder gesofteter Werkstückecken (4) in einem Arbeitsgang entsprechend mehrere aneinander anschließende Strecken (a, b) an dem Band (6) des Kantenmaterials abgemessen und entsprechend mehrere Ausklinkungen (l8) vorgenommen werden.

3. Vorrichtung zum Anbringen eines bandförmigen, von einem Vorrat abzuziehenden Kantenmaterials an die Ecken und die Schmalseiten plattenförmiger Werkstücke, wie Möbelelemente, wobei die Ecken und Schmalseiten gerundet oder gesoftet in die Oberseite der Werkstücke übergehen, mit einer Druckrolle, an die das Kantenmaterial mit einer Klebschicht an der abliegenden Seite herangeführt und durch die dieses Material an die Werkstückschmalseiten und -ecken angedrückt wird, dadurch gekennzeichnet, daß im Abstand vor der Druckrolle (7) auf dem Zuführweg des Bandes (6) des Kantenmaterials eine Stanzvorrichtung (8) angeordnet ist, an der das Band (6) an derjenigen Seite, die auf den gerundeten oder gesofteten Teil (5) der Werkstückecken (4) aufgebracht wird, unter einem Messer (12) hindurchgeführt ist.

4. Vorrichtung nach Anspruch 3, dadurch gekennzeichnet, daß die Schneidkontur (13) des Messers (12) etwa V-förmig oder dreieckförmig mit zur gegenüberliegenden Bandseite hin liegender Spitze ist.

5. Vorrichtung nach Anspruch 3 oder 4, dadurch gekennzeichnet, daß das Messer (12) der Stanzvorrichtung (8) als Wippe ausgebildet ist, deren einer Arm einen Messerkopf (13) bildet und deren anderer Arm von einem hilfskraftbetätigten Stößel (16) beaufschlagt ist.

6. Vorrichtung nach einem der Ansprüche 3 - 5, dadurch gekennzeichnet, daß die Stanzvorrichtung (8) eine Matrize (1o) hat, gegen die das Messer (12) beweglich ist und an der das Band (6) des Kantenmaterials entlang geführt ist.

Fig. 2

Fig. 1

*Fig.3*

*Fig.4*